# EUROPEAN PATENT APPLICATION

(11) **EP 0 630 139 A2**
(43) Date of publication of application: **21.12.1994**
(21) Application number: 94303765.5
(22) Date of filing: 25.05.1994
(51) Int. Cl.: H04M 1/65

(54) **Telephone answering apparatus comprising a reminder message service**

(30) Priority: 01.06.1993 US 69498
(71) Applicant: AT&T Corp., New York, NY 10013-2412 (US)
(72) Inventor: Rosamilia, Joseph Mark, Berkeley Heights, New Jersey 07922 (US); Weaver, Ralph J., Indianapolis, Indiana 46256 (US)
(74) Representative: Buckley, Christopher Simon Thirsk

(57) **Abstract**

A digital answering system (100 ) automatically answers incoming calls from a telephone network and records audible messages. The answering system includes a calendar memory (110) which stores the present time-of-day and day-of-year. The answering system also includes stored playback commands which instruct it to generate telephone ringing signals at a predetermined time and then play back a recorded audible reminder message. The answering system may be a stand-alone unit which is parallel-connected to the telephone network and which generates an audible alerting signal at the predetermined time. Alternatively, the answering system (100) may be series-connected between the telephone network and a pair of conductors to which one or more extension telephones are connected in parallel. In the latter case, recorded audible reminder messages are delivered to an extension telephone after the answering system causes them to ring at the predetermined time. The playback command and audible reminder message are simultaneously entered, either remotely or locally, into the answering system.

## Description

### Technical Field

This invention relates generally to telephone answering machines, and more particularly to the delivery of recorded messages.

### Background of the Invention

Reminder services are available in a variety of forms that have become increasingly more convenient to users since the time when roosters were relied upon to announce the dawn. Perhaps the most familiar product is an alarm clock which mechanically or electrically generates an alerting signal at a predetermined time. Indeed, radios, television sets, and even coffee pots are now programmable to turn ON at selected times. However, because of the vast number of activities that people are now scheduling into their lives, it may not be obvious to most people why an alarm clock is ringing at 2:15 in the afternoon.

One solution to the above problems was provided in a product sold by AT&T known as the GENESIS Telecommunication System. A programmable Electronic Reminder Cartridge was plugged into the Telecommunications System that recorded up to 40 appointments and daily reminders by selecting from a menu of 24 fixed messages. On the specified day, one of the messages would appear on a visual display and an audible alarm would ring. Unfortunately, such products are relatively expensive, programming is not intuitive, and the variety of messages is limited.

Accordingly, it is desirable to provide an inexpensive system that delivers messages to users at one or more predetermined times in the future.

### Summary of the Invention

A telephone answering system includes apparatus for recording audible messages, a calendar memory which stores the present time-of-day, and a playback memory which stores a predetermined time when the recorded audible message is to be played back. Moreover, at the predetermined time, the answering system generates an alerting signal which must to be acknowledged before the recorded audible message is played back.

In one illustrative embodiment of the invention the answering system is series-connected between the telephone network and a pair of conductors to which one or more extension telephones are connected in parallel. Audible reminder messages are transmitted to an extension telephone, following a ringing signal, in response to an extension telephone entering the off-hook state.

In another illustrative embodiment of the invention, the answering system is parallel-connected to the telephone network and includes a tone ringer which responds either to conventional ringing signals from the telephone network or to a playback command signal which is generated at the predetermined time.

In the illustrative embodiments of the invention, the answering system uses digital message recording and playback apparatus. The playback command signal and the audible reminder message are simultaneously entered into the answering system -- either remotely or locally. Time and date information are stored in the playback memory thus enabling the user to record reminder messages for playback at a predetermined time and date.

### Brief Description of the Drawing

The invention and its mode of operation will be more clearly understood from the following detailed description when read with the appended drawing in which:
FIG. 1 is a block diagram of a series-connected answering system in accordance with a first embodiment of the invention;
FIG. 2 is a block diagram of a parallel-connected answering system in accordance with a second embodiment of the invention;
FIG. 3 is a flow diagram that illustrates steps in programming audible messages for delivery at a predetermined time; and
FIG. 4 is a flow diagram that illustrates steps in delivering audible messages at a predetermined time.

### Detailed Description

### Overview

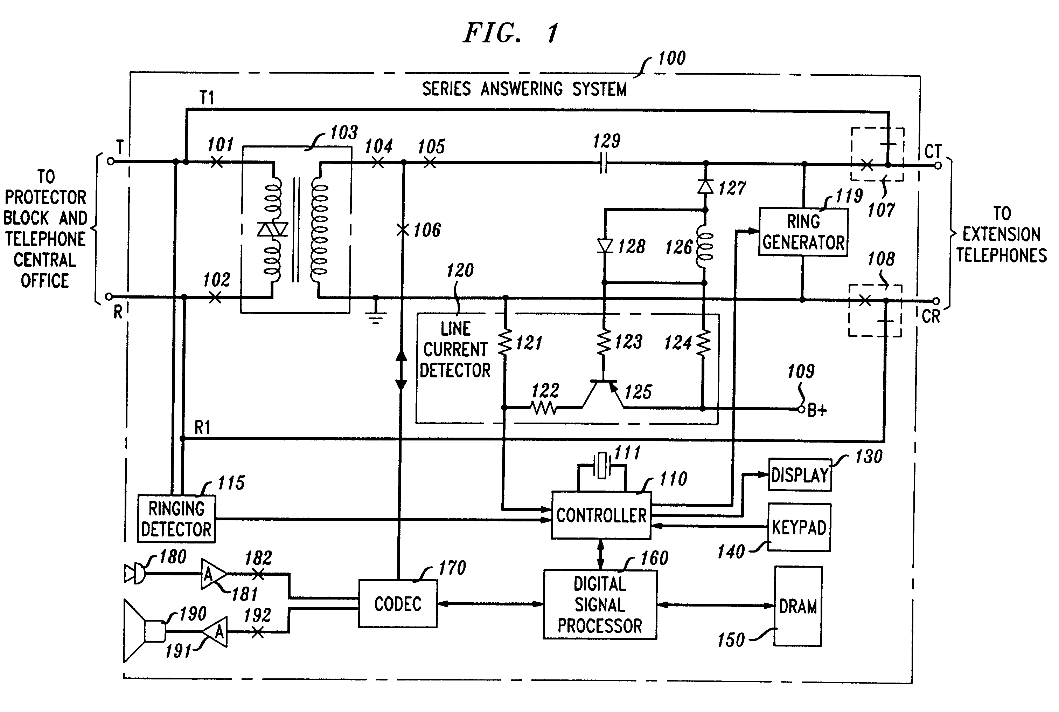

Two embodiments of the present invention are disclosed which provide reminder service in slightly different ways. A first embodiment is shown in FIG. 1 which discloses details of an answering system which is series-connected with the incoming telephone line and is positioned "in front" of all extension telephones at a business or residential premises. The extension telephones are parallel-connected with each other. This embodiment is capable of intercepting and screening all incoming calls before ringing the extension telephones. It may also be programmed to ring the extension telephones at a predetermined time and date to deliver a message which was previously recorded -- either locally or remotely -- reminding the user of an appointment or the like. Telephone answering system 100 is series-connected with the incoming telephone line so that it can ring all extension telephones in order to deliver a reminder message to the user via any of the extension telephones on the premises. Additionally, the user can retrieve incoming messages stored in the answering system from any extension telephone.

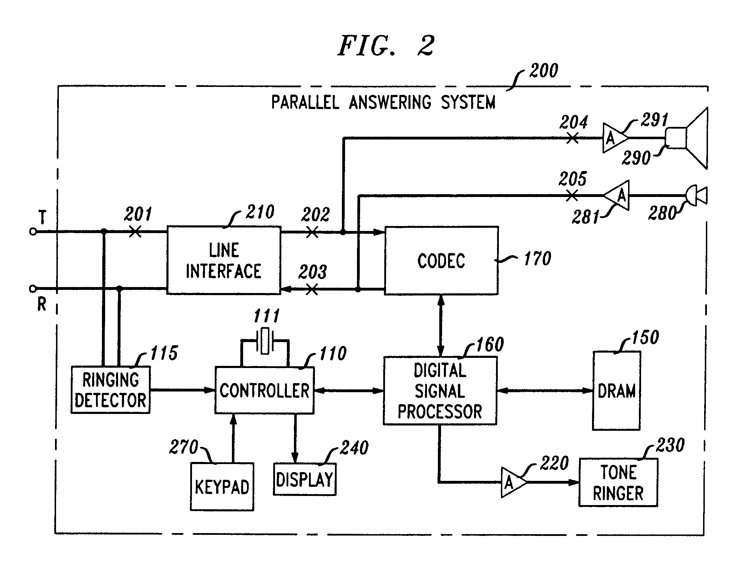

A second embodiment of the present invention is shown in FIG. 2 which discloses details of an answering system which is parallel-connected to the incoming telephone line along with the extension telephones. This embodiment is somewhat easier to implement because it does not need circuitry for interacting with the extension telephones, and because parallel connections merely require insertion of a plug into any available telephone jack at a business or residential premises. However, this embodiment provides message reminder service only at the answering system itself and not at the extension telephones. Nevertheless, the answering system may be programmed to deliver messages that have been previously recorded -- either locally or remotely -- reminding the user of an appointment or the like.

### Series-Connected Embodiment

Referring to FIG. 1, a detailed block diagram of one illustrative embodiment of the present telecommunication system is shown. The system is designed to be connected between the telephone network termination and the termination of all existing extension telephone sets at a customer premises location. In particular, the terminals designated T and R are for connection to a protector block which typically terminates a telephone line from a telephone central office. The terminals designated CT and CR are for connection to the customer premises wiring which joins all existing extension telephone sets in an electrically parallel connection.

Customer convenience hardware such as the AT&T Model 635B connector block facilitates the installation of the series-connected embodiment of the answering system. A plug comprising terminals T, R, CT, and CR -- insertable into a jack of the customer convenience hardware -- breaks the through-connection between the telephone network and the extension telephone sets. When the plug is withdrawn from the hardware, the through-connection is restored. In this manner, the present system may be simply disengaged from the network for maintenance or other purposes.

The telecommunications system comprises a number of building blocks for the purpose of adding a number of features to existing telephone extensions. In particular, the building blocks include a ringing detector 115 for detecting incoming ringing signals from the telephone central office. The reception of such ringing signals is reported to a controller 110 which takes action in response to the receipt of ringing signals in a number of ways.

Transfer switches 107-108 are shown in their fail-safe state (i.e., when local power to answering system 100 is absent); however, when local power is available, the state of these switches is reversed from the state which is shown. On the extension set end of the system, command signals (e.g., touch-tones) from an extension telephone set pass through transfer switches 107-108, capacitor 129, contacts 105-106, and CODEC 170 where analog signals are converted into digital signals. From there, a digital signal processor (DSP) 160 is used to recognize to identify the received command signals and forward them the controller 110. Similarly, command signals received from the telephone network through transformer 103, contacts 104, 106, and CODEC 170 are processed by DSP 160 and forwarded to controller 110. DSP 160 also serves to detect the presence of dial tone signals on the telephone line connected to input terminals T, R. Line current detector 120 is designed to determine when an extension telephone set is in the off-hook state by measuring current flow from DC voltage input terminal 109, through transistor 125 and resistors 121, 122. Transistor 125 is biased "on" when an extension telephone set creates a low DC resistance path between terminals CT and CR. At this time, biasing current flows through resistor 124, inductor 126 and diode 127. Diode 128 eliminates high voltage transients when current flow through inductor 126 abruptly stops. This circuit is important in the practice of the invention because it is necessary to know when one of the extension stations goes off-hook. Reproduction of the reminder message commences only after the answering system has generated a ringing signal and one of the extension telephones goes off-hook. The act of going off-hook is construed as an acknowledgment of the ringing signal.

Although tone detection circuits for touch-tone signals and dial tones are well known and generally comprise filter apparatus tuned for receiving certain frequencies, the present invention uses the considerable computing power of a DSP to perform such minor tasks because it is already available for the processing (compression and expansion) of voice signals. DSP 160 additionally functions to determine whether speech energy is present, and communicates such information to the controller 110 so that answering system 100 will respond appropriately when callers choose not to leave a message. Compressed messages are stored in Dynamic Random Access Memory (DRAM) 150 which, illustratively, is capable of storing 4 Mbits of binary data. CODEC 170 functions to convert analog signals into digital data in one direction, and digital data into analog signals in the other direction.

Compression algorithms are useful in reducing the number of binary digits needed to represent information such as audio and video signals which may include considerable redundancy. For example, when there are long periods of silence in a conversation, it is more convenient to represent them by indicating their duration rather than actually storing large blocks of very small numbers (all of them being substantially equal to zero). It is also well known to store compressed digital audio information in a DRAM within an answering machine, and U.S. Patent 4,959,852 discloses such a technique for use in connection with the storage of outgoing announcements. This particular patent uses a form of compression known as Continuously Variable Slope Delta Modulation (CVSD) which is a syllabic algorithm that reduces redundancy by encoding changes in an analog signal rather than encoding the analog signal itself. Such a compression scheme is completely suitable for use in the present invention and the above patent is hereby incorporated by reference. However, in the preferred embodiment of the present invention, a different compression algorithm known as Groupe-Speciale-Mobile (GSM) is used. This coding scheme is based on Regular Pulse Excitation Linear Predictive Coding (RPE-LPC) combined with Long Term Prediction. This scheme has a net bit rate of 13 kb/s and will be the European Standard for digital mobile radio systems. Although the details of this system are beyond the scope of the present invention, they have been widely published and can be found in at least a 1988 publication of the IEEE identified as CH2561-9/88/0000-0227 at pages 227-230 in an article entitled S*6.1- Speech Codec for the European Mobile Radio System*. In the present invention, the GSM compression algorithm is implemented in DSP 160.

Switches 101, 102 and 104-108, are jointly controlled by controller 110 (according to the software instructions stored in memory), and by input signals from keypad 140 which is operated by the user. Transformer 103 provides DC isolation between the telephone extension sets and the telephone central office line. Capacitor 129 is also used for DC isolation. Because DC power is locally provided via line current detector 120, the present system is not dependent on telephone central office power.

Individual extension telephones (or remotely located telephones) are capable of interacting with the answering system 100 by entering the appropriate touch-tone (DTMF) commands. A particular suffix or prefix, illegal to the telephone central office, may be employed by an extension telephone to distinguish system access. In DTMF dials the pound (#) and asterisk (*) keys are examples of an illegal prefix. Key presses following an illegal prefix are interpreted as commands. For example, the reminder message feature may be activated from an extension telephone set by transmitting an asterisk followed by a predetermined code (perhaps "RE") for REMINDER, or another predetermined code (perhaps "CL") for the CLOCK date and time when the message is to be delivered. Indeed, a number of codes may be used for remotely entering messages and setting dates that are not discussed herein since it is well known to enter and retrieve information from an answering machine remotely, using predetermined codes. Nevertheless, a technique for entering such information using keypad 140 on the answering machine is discussed in detail below. Although a custom liquid crystal display would provide more complete information to the user, the present invention uses a 2-digit message counter for display 130 to simplify the description and because it is similar to the one used in AT&T's Answering System 1343 -- whose operation is well known.

Controller 110 is, illustratively, an 8051 microprocessor which is commercially available from a number of manufacturers including Intel. It includes time-keeping circuitry (System Clock) connected to precision crystal 111 to maintain date (day-of-year) and time (time-of-day) information. Included within the System Clock is an oscillator circuit and a binary counter, both of conventional construction, for producing electrical pulses at a periodic rate which are used to update a calendar memory which also resides within the controller 110. The calendar memory is set when the user holds down the CLOCK button on keypad 140 for longer than 1.5 seconds. "CL" is displayed when CLOCK is pressed. After the button has been held down for 1.5 seconds, display 130 changes to the digit corresponding to the present day setting (1=Sunday, 2=Monday, etc.). To change the day setting, the user must release the CLOCK button and then press the REPEAT button on the keypad 140 (to go backward through the list of days) or the FORWARD button (to go forward through the list of days). If the user presses REPEAT or FORWARD, the setting changes by 1 and continues to change every 500 milliseconds if the button is held down. The settings are shown on display 130 and audibly broadcast on loudspeaker 190.

After the desired day setting is heard, the user presses CLOCK and the present hour settings (1-12) is displayed on display 130 and audibly broadcast along with AM/PM extender. To change the hour setting, the user releases CLOCK and then presses REPEAT (to go backward) or FORWARD (to go forward). If the user presses REPEAT or FORWARD, the setting changes by 1 and continues to change every 500 milliseconds if the button is held down. The new setting is shown on display 130.

When the desired hour setting is heard, the user presses CLOCK and the present minutes settings (00-59) is shown in the display and broadcast through the speaker. To change the minutes setting, the user presses REPEAT (to go backward) or FORWARD (to go forward). If the user presses REPEAT or FORWARD, the setting changes by 1 and continues to change every 500 milliseconds if the button is held down. The new setting is shown on the display and, when the button is released, the setting is broadcast on loudspeaker 190. When the desired minutes setting is heard, the user presses and releases the CLOCK button and "CL" is displayed and the entire clock setting (day/hour/minutes/extender) is broadcast through the loudspeaker.

### Parallel-Connected Embodiment

Referring now to parallel answering system 200 disclosed in FIG. 2, the operation proceeds in substantially the same manner as the answering system of FIG. 1 except that answering system 200 is less complex to install and is less expensive to construct. However, it only delivers reminder messages locally, that is, at answering system 200 and not at an extension telephone.

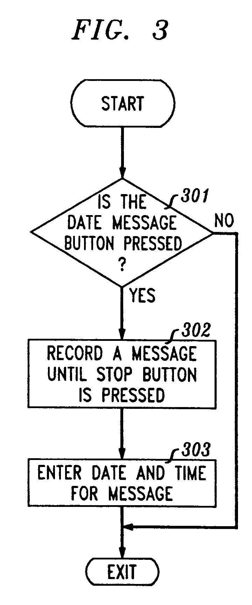

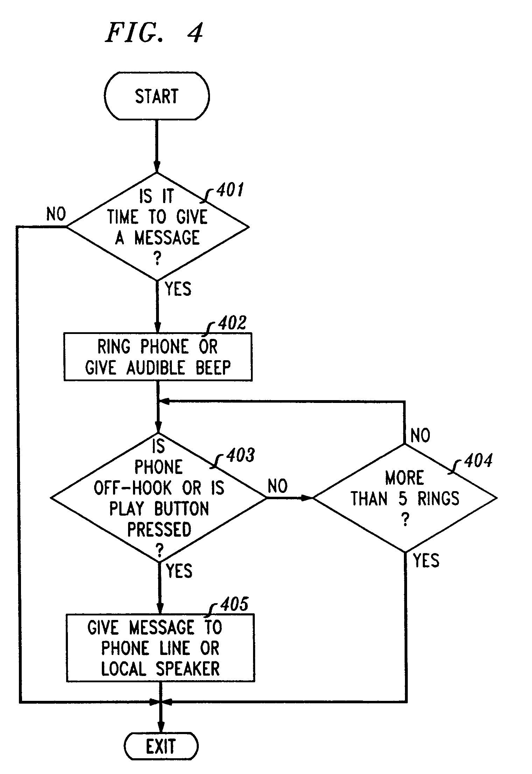

Reminder messages are entered into parallel answering system 200 by the steps illustrated in FIG. 3 via microphone 280, amplifier 281 CODEC 170, DSP 160 and stored in DRAM 150. Reminder messages are played back through loudspeaker 290 via DRAM 150, DSP 160, CODEC 170 and amplifier 291. Switches 204, 205 in these paths are controlled by controller 110. The function of the DRAM, the CODEC and the DSP are the same in the embodiments of FIG. 1 and FIG. 2. Tone ringer 230 is capable of providing a variety of different tones which may be used to distinguish different kinds of ringing signals. For example, regular incoming calls are detected by ringing detector 115 and delivered to tone ringer 230 via controller 110, DSP 160 and amplifier 220. In this situation, one particular tone combination is used. However, when a reminder message is to be delivered, as determined according to the steps of FIG. 4, another tone combination is used. These tone combinations are synthesized by the DSP 160 and used to drive the tone ringer. Switches 201-205 are all controlled by controller 110 in accordance with stored instructions for operating same under different circumstances. For example, when ringing is detected by ringing detector 115, the call is automatically answered when switch 201 is activated. Further, switches 202, 203 are activated to deliver an announcement message to the caller. These and other operations of answering system 200 are ancillary to the present invention, they are well known, and they are not discussed further.

FIG. 3 discloses the steps that are performed locally to record a message for playback at a subsequent predetermined time. When the DATE MESSAGE button on the keypad is pressed (step 301), a process is commenced which records a message (step 302) until the STOP button is pressed. The recording of messages into an answering system is well known, and the details are omitted for the sake of clarity. Thereafter, the date and time of playback are entered after pressing the DATE PLAYBACK button on the keypad (step 303), and entering the desired date and time of message playback via the number keys on the keypad. The process for setting the date and time of playback are substantially similar to the above-described process for setting the clock. Whereas the information regarding the present date/time is stored in the calendar memory of the controller, the information regarding playback date/time is stored in a playback command memory of the controller.

FIG. 4 discloses the steps performed in playing back a reminder message at the predetermined date/time. Step 401 indicates that periodic comparisons are made between the present date/time and the playback date/time to determine when they are the same. It is the designer's choice, however, to implement the invention by commencing the playback process before or after the time when the present date/time is the same as the playback date/time. Such variations may be used to provide advance warning or to avoid bothering the user until he is late. Nevertheless, these minor variations are contemplated by the invention. At the appropriate time, the answering system causes the extension phones to ring (in the series-connected embodiment of FIG. 1) or generates an audible beep (in either the series-connected embodiment of FIG. 1 or the parallel-connected embodiment of FIG. 2) according to step 402. Acknowledgment of the ringing signal, or audible beep, comprises lifting the handset of an extension telephone or pressing the PLAY button of the answering system itself in step 403. Step 404, however, allows a maximum of 5 rings before ending the process. Once again, the actual number of rings and whether to commence the process at a later time if there was no acknowledgment, is a matter of design choice and contemplated by the present invention. However, once an acknowledgment of the ring signal or audible beep is received, the stored reminder message is played back. Such playback either occurs via the loudspeaker of the answering system, the handset of the answering system (when so equipped), or at an extension telephone set -- as appropriate. Once the reminder message has been delivered, the playback date/time command is cleared from memory, or a flag is set, to indicate that the process has been completed.

## Claims

1. An answering system (100, 200) for automatically answering incoming calls from a telephone network and for storing (150) audible messages, the system including a calendar memory (110) for storing data representing the present time-of-day
CHARACTERIZED BY
means (110) for receiving and storing a playback command which includes time-of-day data indicating when a particular stored audible message is to be played back;
means (110) for comparing the time-of-day data stored in the calendar memory with the time-of-day data contained in the playback command;
means (119, 230) for generating an alerting signal when there is correspondence between the time-of-day data in the playback command and in the calendar memory; and
means (160, 170, 190, 290) for playing back the particular stored audible message in response to an acknowledgment of the alerting signal.

2. The answering system (100, 200) of claim 1 further including microphone means (180, 280) and digital message recording means (170, 160, 150) for converting audible sounds, presented to the answering system, into a digitally recorded message, the answering system further including keypad means (140, 270) for entering the playback command.

3. The answering system (100, 200) of claim 1 wherein the calendar memory and the playback command further include day-of-year data.

4. The answering system (100) of claim 1 wherein said system is series connected between the telephone network and a pair of conductors to which one or more extension telephone sets are parallel-connected.

5. The answering system (100) of claim 4 wherein the alerting signal (119) is applied to the pair of conductors for causing an extension telephone set to ring.

6. The answering system (100) of claim 5 wherein the extension telephone set has an active (off-hook) state and an idle (on-hook) state, and wherein a change from the idle state to the active state constitutes acknowledgment of the alerting signal.

7. The answering system (100) of claim 6 further including current detecting means (120), responsive to the flow of electrical current on the pair of conductors, for
detecting the change from idle to active state of one of the extension telephone sets.

8. The answering system (200) of claim 1 wherein said system is parallel-connected to the telephone network.

9. The answering system (200) of claim 8 further including microphone (280) and loudspeaker (290) means interconnected to the telephone network for enabling operation as a standard telephone set.

10. A method for providing audible reminder service using a telephone answering system (100, 200) comprising the steps of:
recording an audible reminder message in a digital memory (150) of the telephone answering system;
entering into the digital memory a playback command, comprising the time-of-day, indicating when the reminder message is to be played back;
periodically updating a calendar memory (110) within the telephone answering system to store information indicating the present time-of-day;
generating an alerting signal when the present time-of-day is substantially equal to the time-of-day information within the playback command;
sensing an acknowledgment of the alerting signal; and
playing back the audible reminder message in response to said acknowledgment.
